(19) Europäisches Patentamt
European Patent Office
Office européen des brevets

(11) **EP 2 935 150 B1**

(12) **FASCICULE DE BREVET EUROPEEN**

(45) Date de publication et mention de la délivrance du brevet:
**20.02.2019 Bulletin 2019/08**

(21) Numéro de dépôt: **13828853.5**

(22) Date de dépôt: **19.12.2013**

(51) Int Cl.:
*C04B 35/05* (2006.01)    *C04B 35/109* (2006.01)

(86) Numéro de dépôt international:
**PCT/IB2013/061155**

(87) Numéro de publication internationale:
**WO 2014/097219 (26.06.2014 Gazette 2014/26)**

(54) **PRODUIT ALUMINE-MAGNÉSIE POUR GAZÉIFICATEUR OU POUR FOUR MÉTALLURGIQUE**

ALUMINIUMOXID-MAGNESIUMPRODUKT FÜR VERGASER ODER FÜR METALLURGISCHEN OFEN

ALUMINA-MAGNESIA PRODUCT FOR GASIFIER OR FOR METALLURGICAL FURNACE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.12.2012 FR 1262349**

(43) Date de publication de la demande:
**28.10.2015 Bulletin 2015/44**

(73) Titulaire: **Saint-Gobain Centre de Recherches et d'Etudes Européen
92400 Courbevoie (FR)**

(72) Inventeurs:
• **JORGE, Eric**
**F-84210 Les Valayans (FR)**
• **FRANCY, Olivier**
**F-84800 L'isle Sur La Sorgue (FR)**

(74) Mandataire: **Nony
11 rue Saint-Georges
75009 Paris (FR)**

(56) Documents cités:
FR-A1- 2 915 195    FR-A1- 2 946 044
SU-A1- 419 495    SU-A1- 507 542
US-A- 5 418 199

## Description

### Domaine technique

L'invention concerne un produit réfractaire fondu et coulé, en particulier destiné à un gazéificateur, à un four métallurgique ou à un four verrier.

### Etat de la technique

Parmi les produits réfractaires, on distingue classiquement les produits fondus et coulés et les produits frittés.

A la différence des produits frittés, les produits fondus et coulés comportent le plus souvent une phase vitreuse intergranulaire reliant des grains cristallisés. Les problèmes posés par les produits frittés et par les produits fondus et coulés; et les solutions techniques adoptées pour les résoudre, sont donc généralement différents. Une composition mise au point pour fabriquer un produit fritté n'est donc pas a *priori* utilisable telle quelle pour fabriquer un produit fondu et coulé, et réciproquement.

Les produits fondus et coulés, souvent appelés "électrofondus", sont obtenus par fusion d'un mélange de matières premières appropriées dans un four à arc électrique ou par toute autre technique adaptée à ces produits. La matière en fusion est ensuite coulée dans un moule, puis le produit obtenu subit un cycle de refroidissement contrôlé pour être amené à température ambiante sans fracturation. Cette opération est appelée « recuisson » par l'homme de l'art. Le refroidissement peut également être libre, en fonction de la technologie de moulage utilisé.

Le produit fondu et coulé Monofrax® L produit et commercialisé par RHI Monofrax LTD présente une composition chimique comprenant 53,6% d'$Al_2O_3$, 44,9% de MgO, 0,44% de silice $SiO_2$, 0,23% d'oxyde de sodium $Na_2O$ et moins de 0,35% en masse de CaO.

La gazéification du charbon est un procédé connu depuis environ une cinquantaine d'années qui connaît actuellement un fort développement. Il permet en effet la production d'une part de gaz de synthèse (CO, $H_2$), sources d'énergie propre, et d'autre part de composés de base pour l'industrie chimique à partir de matières hydrocarbonées très diverses, par exemple de charbon, de coke de pétrole, voire d'huiles lourdes à recycler. Ce procédé permet en outre d'éliminer les composants indésirables, par exemple les NOx, le soufre ou le mercure, avant tout rejet dans l'atmosphère.

Le principe de la gazéification consiste en une combustion partielle contrôlée, sous vapeur d'eau et/ou d'oxygène, à une température comprise entre 1150°C et 1600°C environ et sous pression.

Il existe différents types de gazéificateurs, à lit fixe, fluidisé ou entraîné. Ces gazéificateurs diffèrent par le mode d'introduction des réactifs, la manière dont est effectué le mélange comburant-combustible, les conditions de température et de pression et le procédé d'évacuation des cendres ou du laitier, résidu liquide issu de la réaction.

L'article intitulé « Refractories for Gasification » paru dans la revue « Refractories Applications and News » Volume 8, Number 4, July-August 2003, écrit par Wade Taber du département Energy Systems de la Division Saint-Gobain Industrial Ceramics, décrit la structure d'un revêtement interne d'un gazéificateur.

Les produits réfractaires d'un revêtement interne de gazéificateur subissent le cyclage thermique, la corrosion et l'érosion par le laitier ou les cendres sèches, et l'effet de points chauds où la température peut atteindre typiquement environ 1400°C. L'érosion et la corrosion peuvent notamment conduire à l'infiltration des composés du laitier ou des cendres liquéfiées dans les pores des produits réfractaires qui elle-même, sous l'effet de l'érosion et du cyclage thermique, peut provoquer un écaillage du revêtement, et finalement un arrêt du gazéificateur.

Par ailleurs, le développement de la gazéification des liqueurs noires issues de la fabrication de la pâte à papier nécessite de nouveaux matériaux capables de résister à l'action corrosive des composés sodés et, en particulier présentant une faible porosité pour éviter l'infiltration des produits agressifs.

Pour accroître la durée de vie des revêtements réfractaires, les chercheurs ont tenté d'augmenter son épaisseur. Cette solution présente cependant l'inconvénient d'augmenter les coûts et de diminuer ie volume utile du gazéificateur, et donc son rendement.

James P. Bennett, dans l'article « Refractory liner used in slagging gasifiers » paru dans la revue Refractories Applications and News vol 9 number 5 septembre/octobre 2004 pages 20-25, explique que la durée de vie des revêtements réfractaires actuels des gazéificateurs, en particulier des systèmes refroidis par air, est très limitée malgré leur forte teneur en oxyde de chrome. Il mentionne notamment le rapport de SJ Clayton, GJ Stiegel et J.G Wimer « Gasification Technologies, Gasification Markets and Technologies - Present and Future, an Industry Perspective », US DOE report DOE /FE 0447 July 2002. L'utilisation des produits comportant du chrome a d'ailleurs été abandonnée pour la gazéification des liqueurs noires.

Le produit fondu et coulé décrit dans FR 2 946 044 présente une porosité suffisamment faible pour limiter l'infiltration des composés du laitier ou des cendres liquéfiées. Il présente cependant un problème d'exsudation à haute température (typiquement entre 1000 et 1200°C) sous air.

D'autres produits fondus sont par exemples connus de GB 611 245 ou de JP 10 067 569. Cependant ils présentent une résistance à la corrosion insatisfaisante.

Il existe donc un besoin pour un produit réfractaire présentant des propriétés adaptées aux environnements spécifiques rencontrés à l'intérieur des gazéificateurs, et en particulier présentant une porosité suffisamment faible pour limiter l'infiltration des composés du laitier ou des cendres liquéfiées et présentant un risque d'exsudation plus faible.

La présente invention vise à satisfaire ce besoin.

**Résumé de l'invention**

Plus particulièrement, l'invention concerne un produit réfractaire fondu et coulé présentant une composition chimique telle que, en pourcentages massiques sur la base des oxydes :

| | |
|---|---|
| - $Al_2O_3$ : | complément à 100% ; |
| - MgO : | 26% à 50%, voire 26% à 45% ; |
| - $ZrO_2$ | 0,5% à 10,0% ; |
| - $B_2O_3$ : | $\leq$ 1,5% ; |
| - $SiO_2$: | $\leq$ 0,5% ; |
| - $Na_2O + K_2O$ : | $\leq$ 0,3% ; |
| - CaO: | $\leq$ 1,0% ; |
| - $Fe_2O_3 + TiO_2$: | < 0,55% ; |
| - autres espèces oxydes : | < 1,0%. |

Comme on le verra plus loin, de manière surprenante, les inventeurs ont découvert que cette composition permet à un produit réfractaire fondu selon l'invention de présenter une faible porosité tout en conservant une résistance élevée à la corrosion et sans présenter de risque d'exsudation.

Un produit réfractaire selon l'invention peut encore comporter une ou plusieurs des caractéristiques optionnelles suivantes :

- La teneur massique en $ZrO_2$ est supérieure ou égale à 1,0%, voire supérieure ou égale à 1,5%, voire supérieure ou égale à 2,0% et/ou inférieure ou égale à 7,0%, inférieure ou égale à 5,0%, inférieure ou égale à 4,0%, voire inférieure ou égale à 3,0% ;
- Plus de 70%, plus de 80%, plus de 90%, voire sensiblement 100% en volume de la zircone se présente sous forme monoclinique ;
- La teneur massique en $B_2O_3$ est supérieure ou égale à 0,05%, de préférence supérieure ou égale à 0,1%, de préférence supérieure ou égale à 0,2%, voire supérieure ou égale à 0,3%, voire supérieure ou égale à 0,4% ;

D'autres produits fondus sont par exemples connus de GB 611 245 ou de JP 10 067 569. Cependant ils présentent une résistance à la corrosion insatisfaisante.

Il existe donc un besoin pour un produit réfractaire présentant des propriétés adaptées aux environnements spécifiques rencontrés à l'intérieur des gazéificateurs, et en particulier présentant une porosité suffisamment faible pour limiter l'infiltration des composés du laitier ou des cendres liquéfiées et présentant un risque d'exsudation plus faible.

La présente invention vise à satisfaire ce besoin.

**Résumé de l'invention**

Plus particulièrement, l'invention concerne un produit réfractaire fondu et coulé selon la revendication 1.

Comme on le verra plus loin, de manière surprenante, les inventeurs ont découvert que cette composition permet à un produit réfractaire fondu selon l'invention de présenter une faible porosité tout en conservant une résistance élevée à la corrosion et sans présenter de risque d'exsudation.

Un produit réfractaire selon l'invention peut encore comporter une ou plusieurs des caractéristiques optionnelles suivantes :

- La teneur massique en $ZrO_2$ est supérieure ou égale à 1,0%, voire supérieure ou égale à 1,5%, voire supérieure ou égale à 2,0% et/ou inférieure ou égale à 7,0%, inférieure ou égale à 5,0%, inférieure ou égale à 4,0%, voire inférieure ou égale à 3,0%.
- Plus de 70%, plus de 80%, plus de 90%, voire sensiblement 100% en volume de la zircone se présente sous forme monoclinique.

- La teneur massique en $B_2O_3$ est supérieure ou égale à 0,05%, de préférence supérieure ou égale à 0,1%, de préférence supérieure ou égale à 0,2%, voire supérieure ou égale à 0,3%, voire supérieure ou égale à 0,4%.
- La teneur massique en $B_2O_3$ est inférieure ou égale à 1,0%, de préférence inférieure à 0,8%, voire inférieure ou égale à 0,6%, voire inférieure ou égale à 0,5%.
- De préférence, la teneur massique en Fluor (F) est inférieure à 0,5%, voire inférieure à 0,3%, voire inférieure à 0,1% ou même inférieure à 0,05%.
- De préférence, la somme des teneurs massiques en éléments Bore(B), Fluor(F) et Silicium (Si) est supérieure ou égale à 0,01% et/ou inférieure à 0,1%.
- De préférence, le rapport massique élémentaire R de la teneur en Zirconium (Zr) sur la teneur totale en Bore (B), en Fluor (F) et en Silicium (Si), c'est-à-dire R = Zr/(B+F+Si), est compris entre 4 et 50, de préférence entre 5 et 40, voire entre 7 et 30, voire entre 9 et 20.
- La teneur massique en alumine $Al_2O_3$ est inférieure ou égale à 70%, voire inférieure ou égale à 68%.
- La teneur massique en alumine $Al_2O_3$ est supérieure ou égale à 55%, voire supérieure ou égale à 60%.
- La teneur massique en magnésie MgO est inférieure ou égale à 40%, voire inférieure ou égale à 35%.
- La teneur massique en magnésie MgO est supérieure ou égale à 27%, voire supérieure ou égale à 29%, voire supérieure ou égale à 32%.
- Le rapport massique $Al_2O_3$ sur MgO est inférieur à 2,6, ce qui avantageusement évite la formation de corindon, et/ou, de préférence, supérieur à 1,2, ce qui avantageusement réduit la tendance du produit à la réhydratation et limite le coefficient d'expansion thermique.
- La teneur massique CaO est inférieure ou égale à 0,8%, inférieure ou égale à 0,6%, voire inférieure ou égale à 0,4%.
- La teneur massique ($Na_2O+K_2O$) est inférieure ou égale à 0,25%, inférieure ou égale à 0,2%, voire inférieure ou égale à 0,1%.
- La teneur massique de silice $SiO_2$ est inférieure ou égale à 0,4%, voire inférieure ou égale à 0,3%, voire inférieure ou égale à 0,2%, voire inférieure ou égale à 0,15%.
- Les oxydes de fer et/ou de titane et/ou de calcium ne sont présents qu'à titre d'impuretés.

L'invention concerne également un dispositif choisi parmi

- un gazéificateur,
- un four métallurgique, en particulier un haut-fourneau et notamment un étalage, une ceinture d'une tuyère, un creuset, un ventre, une cuve d'un haut-fourneau,
- un four de cuisson d'anodes, en particulier d'anodes destinées à l'électrolyse, par exemple de l'aluminium,
- un cubilot, en particulier destiné à la refonte de métaux ou à la fusion de roches,
- un incinérateur d'ordures ménagères,
- un four de verrerie,
- une chambre de régénération d'un four de verrerie,
- une cuve d'électrolyse, en milieu de sels fondus, de métaux non ferreux, notamment l'Aluminium ou le Magnésium ou même le Titane,
- un dispositif de protection ou de régulation des jets de fonte ou d'acier, par exemple une plaque d'obturateur à tiroir, un tube protecteur de jet, une busette immergée ou une quenouille,
- un dispositif de brassage, soit mécanique, soit par insufflation de gaz, dans un métal en fusion,
- une brique de siège servant de logement et de support à un dispositif d'insufflation de gaz ou à un dispositif d'insufflation de régulation d'un jet de métal,
- une dalle d'impact de poche ou de répartiteur,
- un accessoire pour la fonderie de la fonte, de l'acier et des aciers spéciaux tel qu'une busette, un tampon ou un déversoir,
- un support pour la cuisson de produits céramiques (« *kiln support* » en anglais), de préférence sous la forme d'un produit mince,
- un dispositif de stockage d'énergie calorifique libérée par un fluide, par exemple de l'air ou de la vapeur d'eau ou de l'huile, dit « régénérateur », en particulier comme média de stockage d'énergie (« A review on packed bed solar energy storage systems », Renewable and Sustainable Energy Reviews, 14 (2010), p 1059-1069, décrit l'état de la technique dans le domaine des régénérateurs),

ledit dispositif comportant un produit selon l'invention ou fabriqué suivant un procédé selon l'invention, notamment sous la forme d'un bloc ou dans un revêtement.

Le produit peut en particulier être en contact ou être disposé dans une région destinée à être en contact avec un laitier, du charbon ou une liqueur corrosive, par exemple une liqueur noire issue de la fabrication de pâte à papier, ou avec un métal en fusion, en particulier un métal ferreux, ou avec du verre en fusion, ou avec des vapeurs alcalines ou des condensats liquides résultant de la fusion d'un verre.

Le produit peut en effet être également utilisé dans un revêtement anti-abrasion, en particulier dans une application dans laquelle il est en contact avec un agent abrasif constitué de particules en suspension dans un fluide (poussières de cyclones, noir de carbone en gazéificateur...), d'un fluide circulant à haute vitesse (buse de pulvérisation...) ou de produits solides massifs frottant circulant sur la surface du matériau (fours poussants, séchage de minerais.

**Définitions**

Les teneurs massiques en oxydes se rapportent aux teneurs globales pour chacun des éléments chimiques correspondants, exprimées sous la forme de l'oxyde le plus stable, selon la convention habituelle de l'industrie ; sont donc inclus les sous-oxydes et éventuellement nitrures, oxynitrures, carbures, oxycarbures, carbonitrures, ou même les espèces métalliques des éléments susmentionnés.

Cependant, il est bien connu que le Fluor ne présente pas d'oxyde stable et qu'il ne participe donc pas à la « base des oxydes », et en particulier, qu'il n'est pas comptabilisé dans les « autres espèces oxydes ». Sa teneur est classiquement mesurée par analyse élémentaire, par exemple par chromatographie ionique après extraction par thermohydrolyse.

Une « matière en fusion » est une masse liquide qui, pour conserver sa forme, doit être contenue dans un récipient. Elle peut contenir quelques particules solides, mais en quantité insuffisante pour qu'elles puissent structurer ladite masse.

Par « impuretés», on entend les constituants inévitables, introduits involontairement et nécessairement avec les matières premières ou résultant de réactions avec ces constituants. Les impuretés ne sont pas des constituants nécessaires, mais seulement tolérés. Par exemple, les composés faisant partie du groupe des oxydes, nitrures, oxynitrures, carbures, oxycarbures, carbonitrures et espèces métalliques de fer, titane, vanadium et chrome sont de préférence des impuretés.

Sauf mention contraire, toutes les teneurs en oxydes dans les produits décrits et revendiqués sont des pourcentages massiques sur la base des oxydes.

**Description détaillée de l'invention**

Dans un produit fondu et coulé selon l'invention, la combinaison d'une forte teneur en alumine et d'une teneur en MgO supérieure à 26% permet d'obtenir un produit de structure cristalline comportant majoritairement du spinelle $Al_2O_3$-MgO apte à répondre aux exigences de haute résistance aux laitiers, aux liqueurs corrosives et à certains verres en fusion, en particulier les verres sodo-calciques ou encore les verres chargés en bore, notamment les verres borosilicatés.

Les inventeurs ont constaté qu'une présence en zircone $ZrO_2$ selon l'invention permet avantageusement d'obtenir des produits à faible porosité, résistant bien au cyclage thermique et n'exsudant pas à haute température, pourvu que la teneur en $ZrO_2$ soit comprise entre 0,5% et 10% en masse.

Les inventeurs ont également découvert que la présence conjointe de zircone $ZrO_2$ et de bore, par exemple sous forme $B_2O_3$ permet avantageusement d'obtenir un optimum pour les propriétés recherchées. Les inventeurs ont observé que la zircone est alors principalement sous forme monoclinique. Cette forme de la zircone est surprenante pour un produit synthétisé par fusion à haute température. Une telle fusion conduit en effet normalement à la présence de zircone sous forme cubique.

Le rapport R = Zr/(B+F+Si) est compris entre 2 et 80. Il est de préférence supérieur ou égal à 4, de préférence supérieur ou égal à 5, de préférence supérieur ou égal à 7, voire supérieur ou égal à 9, et/ou de préférence inférieur ou égal à 50, de préférence inférieur ou égal à 40, de préférence inférieur ou égal à 30, voire inférieur ou égal à 20.

Un rapport massique élémentaire R trop faible conduit à un produit insuffisamment densifié et potentiellement poreux. Si le rapport massique élémentaire R est trop élevé, le produit à densité équivalente est plus sensible au choc thermique et à la corrosion vis-à-vis de certains agents agressifs comme les alcalins.

La teneur en silice $SiO_2$ ne doit pas dépasser 0,5% car elle peut nuire à la résistance à la corrosion. En particulier, à une trop forte teneur, la silice pourrait se combiner avec les impuretés pour augmenter la phase vitreuse, nocive à la tenue à la corrosion, ou réagir avec l'alumine pour former de la mullite. Or la présence de mullite est préjudiciable à la résistance à la corrosion par les liqueurs noires de papèterie.

Dans un produit selon l'invention, on considère que les oxydes $Na_2O$ et $K_2O$ ont des effets similaires. Les oxydes $Na_2O$ et $K_2O$ ont un effet défavorable sur la résistance à la formation d'alumine béta, et tendent à augmenter la teneur en phase vitreuse. La teneur massique de $Na_2O$+$K_2O$ doit donc être inférieure ou égale à 0,3%.

La teneur massique de CaO doit également être inférieure ou égale à 1,0%, de préférence inférieure ou égale à 0,4%.

Selon l'invention, la teneur massique de $Fe_2O_3 + TiO_2$ est inférieure à 0,55% et, de préférence, la teneur massique de $Cr_2O_3$ est inférieure à 0,2%, de préférence inférieure à 0,10%. En effet, ces oxydes sont néfastes et leur teneur doit être de préférence limitée à des traces, de préférence introduites à titre d'impuretés avec les matières premières.

Les « autres espèces oxydes » sont les espèces autres que $Al_2O_3$, $MgO$, $ZrO_2$, $B_2O_3$, $SiO_2$, $Na_2O$, $K_2O$, $CaO$, $Fe_2O_3$ et $TiO_2$. Dans un mode de réalisation, les « autres espèces oxydes » sont limitées à des espèces dont la présence n'est pas particulièrement souhaitée et qui sont généralement présentes à titre d'impuretés dans les matières premières.

Classiquement, dans un produit fondu et coulé comme un produit selon l'invention, les oxydes représentent plus de 98,5%, plus de 99%, voire sensiblement 100% de la masse du produit. Il en est de même dans un produit selon l'invention.

Un produit selon l'invention peut présenter une forme complexe. En particulier, il peut présenter la forme d'une brique ou d'un bloc présentant une surface non plane, par exemple une surface concave et/ou convexe, notamment une surface cylindrique, conique ou en forme de cornière. Une forme complexe permet notamment de s'adapter à l'agencement des organes d'un gazéificateur, et en particulier d'autoriser un passage de conduits.

Un produit selon l'invention peut se présenter sous la forme d'un bloc de dimensions supérieures à 100 mm x 100 mm x 100 mm.

Dans un mode de réalisation, le produit se présente sous la forme d'un bloc de masse supérieure à 5kg. Il peut présenter une retassure, c'est-à-dire un volume poreux macroscopique localisé dans une partie du bloc si cette partie n'a pas été éliminée par usinage du bloc solidifié. Cette retassure est liée au retrait du produit lors de la solidification. La partie du bloc hors retassure est densifiée. Cette zone du bloc la plus dense, dite « zone saine », représente de préférence au moins 10%, de préférence au moins 20% en volume du bloc. Cette zone présente de préférence une porosité ouverte inférieure à 7%, de préférence inférieure à 6%, de préférence inférieure à 5%, voire inférieure à 3%.

La densité apparente de la zone saine est de préférence supérieure à 3,20 g/cm$^3$, de préférence encore supérieure à 3,25 g/cm$^3$, de préférence encore supérieure à 3,30 g/cm$^3$, voire supérieure à 3,40 g/cm$^3$, voire supérieure à 3,45 g/cm$^3$, voire supérieure à 3,50 g/cm$^3$.

Dans la zone saine, les différents oxydes sont distribués de manière sensiblement homogène. En particulier, il n'y a pas d'évolution (augmentation ou diminution) systématique d'un oxyde à proximité de la surface extérieure du produit.

Un produit selon l'invention peut être classiquement fabriqué suivant les étapes a) à c) décrites ci-dessous :

a) mélange de matières premières de manière à former une charge de départ,
b) fusion de ladite charge de départ jusqu'à obtention d'une matière en fusion,
c) solidification de ladite matière en fusion, par refroidissement, de manière à obtenir un produit réfractaire selon l'invention.

A l'étape a), les matières premières sont choisies de manière à garantir les teneurs en oxydes dans le produit fini.

De préférence, on ajoute systématiquement et méthodiquement les oxydes pour lesquels une teneur minimale est nécessaire, notamment $Al_2O_3$, $MgO$ et $ZrO_2$ ou des précurseurs de ces oxydes, par exemple $AlF_3$. $AlF_3$ facilite avantageusement le démarrage de la fusion et limite les risques de fissuration.

De préférence, on tient compte des teneurs de ces oxydes dans les sources des autres oxydes.

Le cas échéant, le bore peut être introduit sous forme de $B_2O_3$ ou par tout précurseur, dont $B_4C$ ou $ZrB_2$, voire $CaB_6$, de préférence sous une forme qui limite son envolement trop rapide lors de la fusion.

Le Fluor est de préférence apporté sous la forme d'un fluorure d'un élément dont la présence est nécessaire dans un produit selon l'invention, par exemple sous la forme $MgF_2$ ou $ZrF_4$. Il peut être également apporté, par exemple, sous forme de $KBF_4$, $KF$ ou $NaF$ ou de minéraux comportant au moins un de ces fluorures.

A l'étape b), la fusion est de préférence réalisée grâce à l'action combinée d'un arc électrique assez long, ne produisant pas de réduction, et d'un brassage favorisant la réoxydation des produits. Le réglage en arc court ou moyen est aussi utilisable pour l'élaboration du produit.

Pour minimiser la formation de nodules d'aspect métallique et éviter la formation de fentes ou fendillements dans le produit final, il est préférable d'opérer la fusion dans des conditions oxydantes.

Préférentiellement on utilise le procédé de fusion à l'arc long décrit dans le brevet français n° 1 208 577 et ses additions n° 75893 et 82310.

Ce procédé consiste à utiliser un four à arc électrique dont l'arc jaillit entre la charge et au moins une électrode écartée de cette charge et à régler la longueur de l'arc pour que son action réductrice soit réduite au minimum, tout en maintenant une atmosphère oxydante au-dessus du bain en fusion et en brassant ledit bain.

La fusion peut en particulier s'opérer à une température supérieure à 2000°C, de préférence comprise entre 2050°C et 2200°C.

A l'étape c), le refroidissement est variable en fonction de la technologie de moulerie nécessaire à l'élaboration des pièces.

De préférence, à l'étape c), la température de coulée est supérieure ou égale à 2000°C.

A l'étape c) deux voies sont possibles :

- Le coulage dans un moule calé dans un coffrage à l'aide d'un isolant granulaire. Le refroidissement est alors naturel. Le procédé est dit "sans transfert".
- Le coulage dans un moule qui est ouvert très rapidement pour extraire la pièce et l'introduire dans un caisson contenant un isolant. La pièce est alors immédiatement recouverte d'isolant. Le procédé est dit "avec transfert".

Dans cette dernière technologie, le refroidissement est contrôlé, de préférence de manière à être effectué à une vitesse inférieure à 20°C par heure, de préférence à la vitesse d'environ 10°C par heure.

Un produit de l'invention ainsi fabriqué est principalement constitué de cristaux de spinelle alumine-magnésie et de périclase. De préférence, un produit selon l'invention comporte moins de 10%, moins de 5%, moins de 2%, moins de 1%, en pourcentage massique, voire sensiblement pas de cristaux d'alumine.

**Exemples**

Les exemples non limitatifs suivants sont donnés dans le but d'illustrer l'invention.

Dans ces exemples, on a employé les matières premières suivantes :

- de l'alumine calcinée contenant principalement, en moyenne massique, 99,5% de $Al_2O_3$, 0,27% de $Na_2O$ et 100 ppm de $SiO_2$,
- de l'$AlF_3$ contenant au plus 0,15% de $SiO_2$ et au plus 0,25% de $Na_2O$,
- de la magnésie synthétique calcinée de haute pureté, contenant 98,5% MgO, au plus 0,9% de CaO, 0,2% de $SiO_2$ et au plus 0,6% de $Fe_2O_3$,
- du carbure de bore, contenant 76,25% de Bore, 20,1% de Carbone et 0,18% de $Fe_2O_3$,
- de la zircone CC10 fournie par SEPR présentant un diamètre médian d'environ 3 microns.
- de l'oxyde de cuivre $Cu_2O$ contenant typiquement 98,7% de $Cu_2O$ et 0,7% de cuivre métallique.

Les matières premières ont été fondues selon le procédé classique de fusion en four à arc, comme décrit ci-dessus, puis la matière en fusion a été coulée pour obtenir des blocs.

L'analyse chimique des produits obtenus est donnée dans le tableau 1 ; il s'agit d'une analyse chimique globale moyenne, donnée en pourcentages massiques Les analyses chimiques élémentaires sont réalisées par fluorescence X. Le bore est dosé par spectrométrie par torche à plasma (ICP), et le fluor par chromatographie ionique après extraction par pyro-hydrolyse.

Dans le tableau 1 suivant, * indique que l'exemple est en dehors de l'invention, une case vide correspond à une teneur inférieure ou égale à 0,04% massique. Le complément à 100% est constitué par les espèces oxydes autres que celles mentionnées dans le tableau.

La porosité totale est donnée par la relation suivante :

$$\text{Porosité totale} = 100 \times (\text{densité absolue} - \text{densité apparente}) / \text{densité absolue}$$

Les mesures de la densité apparente et de la porosité ouverte sont effectuées suivant la norme ISO5017 sur un barreau prélevé à coeur de bloc, en zone saine.

La densité absolue est mesurée sur poudre broyée au moyen d'un pycnomètre à hélium.

La résistance au cyclage thermique est mesurée de la manière suivante : des échantillons de taille 50*50*50 $mm^3$ sont préparés par découpe du bloc dans la zone saine. Cinq échantillons pour chaque exemple sont placés dans un four à 1100°C sous air pendant 30 minutes puis plongés dans de l'eau à 20°C pendant 5 minutes. Le test est répété jusqu'à rupture des échantillons. Le tableau 1 fournit le nombre de cycles moyens auxquels ont résisté les 5 échantillons.

L'analyse de diffraction aux rayons X a révélé la présence majoritairement de phases spinelle et périclase. La forme de la zircone a été identifiée par diffraction aux rayons X. « C » signifie « cubique ». « n.m » signifie non mesuré. « NA » signifie « non applicable ».

Tableau 1

| | 1* | 2* | 3* | 4* | 5 | 6 | 7 | 8 | 9 | 10 | 11 | 12 | 13* |
|---|---|---|---|---|---|---|---|---|---|---|---|---|---|
| Composition chimique sur la base des oxydes | | | | | | | | | | | | | |
| $Al_2O_3$ | 71,4 | 63,24 | 62,82 | 61,88 | 62,4 | 60,6 | 62,4 | 66,0 | 61,6 | 65,1 | 58,6 | 63,6 | 56,4 |
| MgO | 27,6 | 35,2 | 36 | 35,91 | 34,6 | 38,0 | 34,6 | 30,7 | 34,1 | 29,1 | 34,2 | 26,0 | 31,4 |
| $ZrO_2$ | <0,1 | <0,1 | <0,1 | <0,1 | 2,6 | 0,5 | 2,2 | 2,5 | 2,9 | 4,8 | 5,6 | 9,1 | 11,3 |
| $B_2O_3$ | 0,3 | 0,6 | 0,3 | 0,5 | <0,05 | 0,4 | 0,3 | 0,3 | 0,7 | 0,4 | 0,9 | 0,8 | 0,4 |
| $SiO_2$ | 0,08 | 0,05 | 0,08 | 0,05 | <0,05 | 0,05 | <0,05 | 0,12 | <0,05 | 0,13 | <0,05 | <0,05 | 0,07 |
| $Na_2O+K_2O$ | 0,11 | 0,09 | 0,13 | ≤0,3 | 0,09 | 0,11 | 0,09 | 0,08 | 0,09 | <0,05 | 0,10 | 0,11 | 0,08 |
| CaO | 0,14 | 0,35 | 0,05 | 0,5 | 0,18 | 0,23 | 0,28 | 0,14 | 0,28 | 0,15 | 0,27 | 0,13 | 0,2 |
| $Fe_2O_3+TiO_2$ | 0,11 | 0,18 | 0,13 | 0,21 | 0,13 | 0,11 | 0,10 | 0,16 | 0,16 | 0,15 | 0,15 | 0,20 | 0,12 |
| CuO | | 0,13 | 0,49 | 0,19 | <0,05 | <0,05 | <0,05 | <0,05 | <0,05 | <0,05 | <0,05 | <0,05 | <0,05 |
| Autres oxydes | Complément à 100% | | | | | | | | | | | | |
| Forme de la zircone | NA | NA | NA | NA | C | n.m. | Zircone monoclinique | | | | | | C |
| Zr/(B+F+Si) | <0,3 | <0,2 | <0,4 | <0,4 | >40 | 2 | 13 | 11 | 9 | 17 | 13 | 24 | 47 |
| Densité apparente ($g/cm^3$) | | 3,44 | 3,43 | 3,35 | 3,34 | 3,44 | 3,51 | 3,50 | 3,55 | 3,50 | 3,51 | 3,53 | 3,53 |
| Porosité totale (%) | 10,9 | 3,8 | 4,5 | 6,5 | | | | | | | | | |
| Porosité ouverte (%) | 9,5 | 2,8 | 3,0 | 3,5 | 7,2 | 1,7 | 0,7 | 1,5 | 0,6 | 3,4 | 1,8 | 1,2 | 2,2 |
| Résistance au cyclage thermique | | 0,7 | 0,6 | 0,8 | 4 | 2,5 | 2,6 | 3,0 | 2,9 | 2,8 | 2,5 | 2,0 | 1,8 |

L'exsudation a été observée sur les blocs des exemples 2 à 4 après traitement thermique à 1100°C pendant 30 minutes. La surface externe du bloc observé présente un graisage formé par des boursoufflures de couleur verdâtre composées d'alumine, de magnésie, de silice et de cuivre. Ce phénomène n'a pas été observé sur les blocs des exemples selon l'invention.

Les résultats montrent que les produits de l'invention testés présentent une résistance au cyclage thermique améliorée par rapport à celles des exemples comparatifs. De plus, les produits selon l'invention présentent un excellent compromis entre la porosité ouverte et la résistance au cyclage thermique pour les compositions comprenant de la zircone et du bore.

Les résultats montrent également que les compositions de l'état de la technique comportant du CuO peuvent être avantageusement remplacées par une composition selon l'invention pour d'obtenir un produit à la fois peu poreux, résistant mieux au cyclage thermique et ne présentant pas de problème d'exsudation.

Bien entendu, la présente invention n'est pas limitée aux modes de réalisation décrits fournis à titre d'exemples illustratifs et non limitatifs.

## Revendications

1. Produit réfractaire fondu et coulé présentant une composition chimique telle que, en pourcentages massiques sur la base des oxydes :

| | |
|---|---|
| - $Al_2O_3$ : | complément à 100% ; |
| - MgO : | 26% à 50% ; |
| - $ZrO_2$ | 0,5% à 10,0% ; |
| - $B_2O_3$ : | $\leq$ 1,5% ; |
| - $SiO_2$ : | $\leq$ 0,5% ; |
| - $Na_2O + K_2O$ : | $\leq$ 0,3% ; |
| - CaO : | $\leq$ 1,0% ; |
| - $Fe_2O_3 + TiO_2$ : | < 0,55% ; |
| - autres espèces oxydes : | < 1,0%, |

pourvu que le rapport massique élémentaire R de la teneur en Zirconium sur la teneur totale en Bore, en Fluor et en Silicium soit compris entre 2 et 80.

2. Produit selon la revendication précédente, dans lequel la teneur massique en $ZrO_2$ est supérieure ou égale à 1,0%.

3. Produit selon la revendication précédente, dans lequel la teneur massique en $ZrO_2$ est supérieure ou égale à 2,0%.

4. Produit selon l'une quelconque des revendications précédentes, dans lequel la teneur massique en $ZrO_2$ est inférieure ou égale à 7,0%.

5. Produit selon la revendication précédente, dans lequel la teneur massique en $ZrO_2$ est inférieure ou égale à 5,0%.

6. Produit selon l'une quelconque des revendications précédentes, dans lequel plus de 70% en volume de la zircone se présente sous forme monoclinique.

7. Produit selon l'une quelconque des revendications précédentes, dans lequel la teneur massique en $B_2O_3$ est supérieure ou égale à 0,05%.

8. Produit selon la revendication précédente, dans lequel la teneur massique en $B_2O_3$ est supérieure ou égale à 0,2% et inférieure ou égale à 0,6%.

9. Produit selon l'une quelconque des revendications précédentes, dans lequel le rapport massique élémentaire R est compris entre 5 et 50.

10. Produit selon la revendication précédente, dans lequel ledit rapport massique élémentaire R est compris entre 7 et 30.

**11.** Produit selon l'une quelconque des revendications précédentes, dans lequel

- la teneur massique en alumine $Al_2O_3$ est inférieure ou égale à 70% et supérieure ou égale à 55%, et/ou
- la teneur massique MgO est inférieure ou égale à 40% et supérieure ou égale à 29%.

**12.** Produit selon la revendication précédente, dans lequel

- la teneur massique d'alumine $Al_2O_3$ est inférieure ou égale à 68% et supérieure ou égale à 60%, et/ou
- la teneur massique MgO est inférieure ou égale à 35% et supérieure ou égale à 32%, et/ou le rapport massique $Al_2O_3$ sur MgO est inférieur à 2,6 et supérieur à 1,2.

**13.** Produit selon l'une quelconque des revendications précédentes, dans lequel

- la teneur massique en CaO est inférieure ou égale à 0,6% ; et/ou
- la teneur massique en $Na_2O+K_2O$ est inférieure ou égale à 0,25% ; et/ou
- la teneur massique en silice $SiO_2$ est inférieure ou égale à 0,15% ; et/ou
- la teneur massique en oxydes de fer et/ou de titane, $Fe_2O_3 + TiO_2$, est inférieure à 0,4% ; et/ou
- la teneur massique en oxyde de chrome est inférieure à 0,1%, et/ou
- la teneur massique en CuO est inférieure ou égale à 0,4%.

**14.** Dispositif choisi parmi

- un gazéificateur,
- un four métallurgique, en particulier un haut-fourneau et notamment un étalage, une ceinture d'une tuyère, un creuset, un ventre, une cuve d'un haut-fourneau,
- un four de cuisson d'anodes, en particulier d'anodes destinées à l'électrolyse, par exemple de l'aluminium,
- un cubilot, en particulier destiné à la refonte de métaux ou à la fusion de roches,
- un incinérateur d'ordures ménagères,
- un four de verrerie,
- une chambre de régénération d'un four de verrerie,
- une cuve d'électrolyse, en milieu de sels fondus, de métaux non ferreux, notamment l'Aluminium ou le Magnésium ou le Titane,
- un dispositif de protection ou de régulation des jets de fonte ou d'acier, par exemple une plaque d'obturateur à tiroir, un tube protecteur de jet, une busette immergée ou une quenouille,
- un dispositif de brassage, soit mécanique, soit par insufflation de gaz, dans un métal en fusion,
- une brique de siège servant de logement et de support à un dispositif d'insufflation de gaz ou à un dispositif d'insufflation de régulation d'un jet de métal,
- une dalle d'impact de poche ou de répartiteur,
- un accessoire pour la fonderie de la fonte, de l'acier et des aciers spéciaux tel qu'une busette, un tampon ou un déversoir,
- un support pour la cuisson de produits céramiques, de préférence sous la forme d'un produit mince,
- un régénérateur, en particulier comme média de stockage d'énergie,

ledit dispositif comportant un produit selon l'une quelconque des revendications précédentes.

**15.** Dispositif selon la revendication précédente, ledit produit étant en contact ou étant disposé dans une région destinée à être en contact avec un laitier, du charbon ou une liqueur corrosive, par exemple une liqueur noire issue de la fabrication de pâte à papier, ou avec un métal en fusion, en particulier un métal ferreux, ou avec du verre en fusion, ou avec des vapeurs alcalines ou des condensats liquides résultant de la fusion d'un verre, ou avec un matériau abrasif.

**Patentansprüche**

**1.** Schmelzgegossenes feuerfestes Produkt mit einer chemischen Zusammensetzung, die in Gewichtsprozent, bezogen auf Oxide, aufweist:

| | |
|---|---|
| - $Al_2O_3$: | Ergänzung auf 100 % |
| - MgO: | 26 % bis 50 %; |
| - $ZrO_2$: | 0,5 % bis 10,0 %; |
| - $B_2O_3$: | < 1,5 %; |
| - $SiO_2$: | < 0,5 % ; % |
| - $Na_2O$ + $K_2O$: | < 0,3 %; |
| - CaO: | < 1,0 %; |
| - $Fe_2O_3$ + $TiO_2$: | < 0,55 %; |
| - andere Oxidarten: | < 1,0 %, |

mit der Maßgabe, dass das elementare Massenverhältnis R des Zirkoniumgehalts zum gesamten Bor-, Fluor- und Siliziumgehalt zwischen 2 und 80 liegt.

2. Produkt nach dem vorangehenden Anspruch, wobei der $ZrO_2$-Massengehalt größer oder gleich 1,0 % ist.

3. Produkt nach dem vorangehenden Anspruch, wobei der $ZrO_2$-Massengehalt größer oder gleich 2,0 % ist.

4. Produkt nach einem der vorangehenden Ansprüche, wobei der $ZrO_2$-Massengehalt kleiner oder gleich 7,0 % ist.

5. Produkt nach dem vorangehenden Anspruch, wobei der $ZrO_2$-Massengehalt kleiner oder gleich 5,0 % ist.

6. Produkt nach einem der vorangehenden Ansprüche, wobei mehr als 70 Vol.-% Zirkoniumoxid in monokliner Form vorliegen.

7. Produkt nach einem der vorangehenden Ansprüche, wobei der $B_2O_3$-Mässengehält größer oder gleich 0,05 % ist.

8. Produkt nach dem vorangehenden Anspruch, wobei der $B_2O_3$-Massengehalt größer oder gleich 0,2 % und kleiner oder gleich 0,6 % ist.

9. Produkt nach einem der vorangehenden Ansprüche, wobei das elementare Massenverhältnis R zwischen 5 und 50 liegt.

10. Produkt nach dem vorhergehenden Anspruch, wobei das elementare Massenverhältnis R zwischen 7 und 30 liegt.

11. Produkt nach einem der vorhergehenden Ansprüche, wobei

- der Massengehalt an Aluminiumoxid $Al_2O_3$ kleiner oder gleich 70 % und größer oder gleich 55 % ist, und/oder
- der MgO-Massengehalt kleiner oder gleich 40 % und größer oder gleich 29 % ist.

12. Produkt nach dem vorangehenden Anspruch, wobei

- der Massengehalt an Aluminiumoxid $Al_2O_3$ kleiner oder gleich 68 % und größer oder gleich 60 % ist, und/oder
- der Massengehalt MgO kleiner oder gleich 35 % und größer oder gleich 32 % ist, und/oder das Massenverhältnis $Al_2O_3$ zu MgO kleiner als 2,6 und größer als 1,2 ist.

13. Produkt nach einem der vorangehenden Ansprüche, wobei

- der CaO-Massengehalt kleiner oder gleich 0,6 % ist; und/oder
- der $Na_2O$ + $K_2O$-Massengehalt kleiner oder gleich 0,25 % ist; und/oder
- der Silika-Massengehalt $SiO_2$ kleiner oder gleich 0,15 % ist; und/oder
- der Massengehalt an Eisen- und/oder Titanoxiden, $Fe_2O_3$ + $TiO_2$, weniger als 0,4 % ist; und/oder
- der Chromoxid-Massengehalt weniger als 0,1 % ist, und/oder
- der CuO-Massengehalt kleiner oder gleich 0,4 % ist.

14. Vorrichtung, ausgewählt aus

- einem Vergaser,
- einem metallurgischen Ofen, insbesondere einem Hochofen und insbesondere einer Rast, einem Düsengürtel, einem Ofenraum, einem Kohlensack, einem Hochofenschacht,
- einem Anoden-Brennofen, insbesondere Anoden für die Elektrolyse, zum Beispiel Aluminium,
- einem Kuppelofen, insbesondere zum Umschmelzen von Metallen oder zum Schmelzen von Gestein,
- einer Hausmüllverbrennungsanlage,
- einem Glasschmelzofen,
- einer Regenerationskammer eines Glasofens,
- einer Elektrolysezelle für die Elektrolyse in einem geschmolzenen Salzmedium, aus Nichteisenmetallen, insbesondere Aluminium oder Magnesium oder Titan,
- einer Vorrichtung zum Schützen oder Regulieren von Gusseisen oder Stahl, zum Beispiel eine Sperrschieberplatte, ein Strahlschutzrohr, eine Tauchdüse oder einer Stopfstange,
- einer Mischvorrichtung, entweder mechanisch oder durch Gasinjektion, zur Bewegung in einem geschmolzenen Metall,
- einem Auflageblock, der zur Aufnahme und Halterung eines Gasgebläses oder eines Metallstromregelgebläses verwendet wird,
- einer Aufprallfliese für Gießpfannen oder Gießwannen,
- einem Gießerei-Zubehör für Gusseisen, Stahl und Sonderstähle, wie Düse, Verschluss oder Abdichtrinne,
- einem Träger zum Brennen von Keramikprodukten, vorzugsweise in Form eines dünnen Produkts,
- einem Regenerator, insbesondere als Energiespeichermedium,

wobei die Vorrichtung ein Produkt nach einem der vorangehenden Ansprüche umfasst.

15. Vorrichtung nach dem vorangehenden Anspruch, wobei das Produkt in einem Bereich in Kontakt ist oder angeordnet ist, der dazu bestimmt ist, mit einer Schlacke, Kohle oder korrosiven Flüssigkeit, zum Beispiel einer Schwarzlauge aus der Papierzellstoffherstellung, oder mit einer Metallschmelze, insbesondere einem Eisenmetall, oder mit geschmolzenem Glas, oder mit alkalischen Dämpfen oder flüssigen Kondensaten, die beim Schmelzen eines Glases entstehen, oder mit einem abrasiven Material, in Kontakt zu kommen.

## Claims

1. A fused-cast refractory product having a chemical composition such that, in percentages by weight on the basis of the oxides:

| | |
|---|---|
| - $Al_2O_3$: | balance to 100%; |
| - MgO: | 26% to 50%; |
| - $ZrO_2$ | 0.5% to 10.0%; |
| - $B_2O_3$: | $\leq 1.5\%$; |
| - $SiO_2$: | $\leq 0.5\%$; |
| - $Na_2O + K_2O$: | $\leq 0.3\%$; |
| - CaO: | $\leq 1.0\%$; |
| - $Fe_2O_3 + TiO_2$: | $< 0.55\%$; |
| - other oxide species: | $< 1.0\%$; |

provided that an elementary weight ratio R of the content of zirconium Zr to the total content of boron B, fluorine F and silicon Si is between 2 and 80.

2. The product according to the preceding claim, wherein the weight content of $ZrO_2$ is greater than or equal to 1.0%.

3. The product according to the preceding claim, wherein the weight content of $ZrO_2$ is greater than or equal to 2.0%.

4. The product according to any one of the preceding claims, wherein the weight content of $ZrO_2$ is less than or equal to 7.0%.

5. The product according to the preceding claim, wherein the weight content of $ZrO_2$ is less than or equal to 5.0%.

6. The product according to any one of the preceding claims, wherein more than 70% by volume of the zirconia is present in monoclinic form.

7. The product according to any one of the preceding claims, wherein the weight content of $B_2O_3$ is greater than or equal to 0.05%.

8. The product according to the preceding claim, wherein the weight content of $B_2O_3$ is greater than or equal to 0.2% and less than or equal to 0.6%.

9. The product according to any one of the preceding claims, wherein said elementary weight ratio R is between 5 and 50.

10. The product according to the preceding claim, wherein said elementary weight ratio R is between 7 and 30.

11. The product according to any one of the preceding claims, wherein

   - the weight content of alumina $Al_2O_3$ is less than or equal to 70% and greater than or equal to 55%, and/or
   - the weight content of MgO is less than or equal to 40% and greater than or equal to 29%.

12. The product according to the preceding claim, wherein

   - the weight content of alumina $Al_2O_3$ is less than or equal to 68% and greater than or equal to 60%, and/or
   - the weight content of MgO is less than or equal to 35% and greater than or equal to 32%, and /or the weight ratio of $Al_2O_3$ to MgO is less than 2.6 and greater than 1.2.

13. The product according to any one of the preceding claims, wherein

   - the weight content of CaO is less than or equal to 0.6%; and/or
   - the weight content of $Na_2O+K_2O$ is less than or equal to 0.25%; and/or
   - the weight content of silica $SiO_2$ is less than or equal to 0.15%; and/or
   - the weight content of iron and/or titanium oxides, $Fe_2O_3 + TiO_2$, is less than 0.4%; and/or
   - the weight content of chromium oxide is less than 0.1%, and/or
   - the weight content of CuO is less than or equal to 0.4%.

14. A device selected from:

   - a gasifier,
   - a metallurgical furnace, in particular a blast furnace and especially a bosh, a tuyere belt, a hearth, a belly, a stack of a blast furnace,
   - an anode baking furnace, in particular for anodes intended for electrolysis, for example of aluminium,
   - a cupola furnace, in particular intended for remelting metals or for melting rocks,
   - a municipal waste incinerator,
   - a glass furnace,
   - a regeneration chamber of a glass furnace,
   - an electrolytic cell for the electrolysis, in a molten salt medium, of nonferrous metals, especially aluminum or magnesium or titanium,
   - a device for protecting or regulating streams of cast iron or steel, for example a slide-salve shut-off plate, a stream shroud tube, a submerged nozzle or a stopper-rod assembly,
   - an agitation device, either of mechanical or gas-injection type, for agitation in a molten metal,
   - a seating block serving as a housing and support for a gas-injection device or for an insufflation device for regulating a metal stream,
   - an impact tile for ladles or tundishes,
   - a foundry accessory for cast iron, steel and special steels such as a nozzle, a stopper or a spout,
   - a support for firing ceramic products, preferably in the form of a thin product,
   - a regenerator, in particular as energy storage media, said device comprising a product according to any one of the preceding claims.

15. A device according to the preceding claim, said product being in contact or being positioned in a region intended to be in contact with a slag, coal or a corrosive liquor, for example a black liquor resulting from the manufacture of paper pulp, or with a molten metal, in particular a ferrous metal, or with molten glass, or with alkaline vapors or liquid condensates resulting from the melting of a glass, or with an abrasive material.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2946044
- GB 611245 A
- JP 10067569 B
- FR 1208577
- FR 75893
- FR 82310

**Littérature non-brevet citée dans la description**

- **WADE TABER.** Refractories for Gasification. *Refractories Applications and News,* Juillet 2003, vol. 8 (4
- **JAMES P. BENNETT.** Refractory liner used in slagging gasifiers. *Refractories Applications and News,* Septembre 2004, vol. 9 (5
- **SJ CLAYTON ; GJ STIEGEL ; J.G WIMER.** Gasification Technologies, Gasification Markets and Technologies - Present and Future, an Industry Perspective. *US DOE report DOE /FE 0447,* Juillet 2002
- A review on packed bed solar energy storage systems. *Renewable and Sustainable Energy Reviews,* 2010, vol. 14, 1059-1069